# EUROPÄISCHE PATENTSCHRIFT

(11) **EP 3 661 791 B1**
(45) Veröffentlichungstag und Bekanntmachung des Hinweises auf die Patenterteilung: **22.06.2022**
(21) Anmeldenummer: 18750142.4
(22) Anmeldetag: 31.07.2018
(51) Int. Cl.: B60K 6/48, B60K 6/365, B60K 6/547, F16H 3/72

(54) **GETRIEBE FÜR EINE HYBRIDANTRIEBSANORDNUNG, HYBRIDANTRIEBSANORDNUNG UND FAHRZEUG**
TRANSMISSION FOR A HYBRID DRIVE ARRANGEMENT, HYBRID DRIVE ARRANGEMENT AND VEHICLE
BOÎTE DE VITESSES POUR UN SYSTÈME DE PROPULSION HYBRIDE, SYSTÈME DE PROPULSION HYBRIDE ET VÉHICULE

(30) Priorität: 02.08.2017 DE 102017213385
(43) Veröffentlichungstag der Anmeldung: 10.06.2020
(73) Patentinhaber: Robert Bosch GmbH, 70442 Stuttgart (DE)
(72) Erfinder: HUBER, Thomas, 74915 Daisbach (DE); ESZTERLE, Dominik, 74078 Heilbronn (DE); SMEJKAL, Tom, 01069 Dresden (DE); WIRTH, Christian, 85452 Eichenried (DE); DEMPEL, Rolf Lucius, 74354 Besigheim (DE); BRUMMER, Simon, 82194 Gröbenzell (DE)
(86) Internationale Anmeldenummer: PCT/EP2018/070689
(87) Internationale Veröffentlichungsnummer: WO 2019/025420

(56) Entgegenhaltungen:
- DE-A1-102008 044 101
- DE-A1-102011 056 167
- DE-A1-102014 204 009
- DE-A1-102015 209 294

## Beschreibung

Die Erfindung betrifft ein Getriebe für eine Hybridantriebsanordnung. Ferner betrifft die Erfindung eine Hybridantriebsanordnung mit einem Getriebe und ein Fahrzeug mit einer Hybridantriebsanordnung

### Stand der Technik

Getriebe für Hybridantriebsanordnungen sind aus dem Stand der Technik bekannt. Beispielsweise zeigt die WO2010/009943 A1 ein Doppelkupplungsgetriebe, welches den Betrieb eines Hybridfahrzeugs verbrennungsmotorisch, elektromotorisch und mit beiden Antriebsaggregaten zusammen ermöglicht. Derartige Getriebe sind komplex, schwer und teuer. Es besteht Bedarf an Getriebetopologien mit reduzierter mechanischer Komplexität, verringertem Raumbedarf und verringertem Gewicht.

Aus der DE 10 2015 209 294 A1 ist ein Getriebe für ein Hybridfahrzeug mit zwei Planetengetrieben bekannt, wobei ein Rotor einer elektrischen Maschine mit einem Planetenrad des ersten Planetengetriebes sowie mit einem Hohlrad des zweiten Planetengetriebes fest verbunden bzw. gekoppelt ist.

Aus der DE 10 2008 044101 A1 ist ein Verfahren zur Vermeidung von Rasselgeräuschen im Hybridgetriebe eines Hybridfahrzeugs bekannt. Dabei ist eine Hybridbaugruppe vorgesehen sowie ein Basisgetriebe, welches mit der Hybridbaugruppe mittels einer Eingangswelle verbunden ist. Die Hybridbaugruppe weist eine mit einem Verbrennungsmotor koppelbare Antriebswelle auf. Die Hybridbaugruppe umfasst eine elektrische Maschine mit einem Rotor und einem Stator und ein als Planetengetriebe ausgeführtes Getriebe, wobei der Rotor mit dem Hohlrad des Planetengetriebes verbunden und das Sonnenrad des Planetengetriebes an ein Gehäuse gekoppelt ist. Die Eingangswelle ist mit dem Planetenrad des Planetengetriebes gekoppelt und sie ist über eine Trennkupplung mit der Antriebswelle koppelbar. Um Rasselgeräusche zu vermeiden ist dabei vorgesehen, dass die zumindest eine elektrische Maschine während des Betriebs des Verbrennungsmotors mit geringer Teillast betrieben wird, um im Getriebe die Anlage der Lastflanke und eine Zentrierung zu gewährleisten, wodurch Schwingungen der Verzahnungen des Getriebes und somit Rasselgeräusche vermieden werden.

Aus der DE 10 2011 056 167 A1 ist ein Kraftübertragungssystem eines Hybridelektrofahrzeugs bekannt, wobei ein Getriebe mit zwei Planetengetrieben vorgesehen ist. Dabei ist ein Verbrennungsmotor ausschließlich mit dem Planetenrad des ersten Planetengetriebes fest verbunden bzw. mittels eines Schaltelements koppelbar.

Aus der DE 10 2014 204 009 A1 ist ein mehrgängiges Planetengetriebesystem als Komponente des Antriebsstrangs eines Kraftfahrzeuges bekannt.

Der Begriff "gekoppelt" bzw. "angekoppelt" wird im Folgenden im Sinne einer festen Verbindung benutzt. Im Gegensatz dazu umfasst der Begriff "koppelbar" im Rahmen der vorliegenden Beschreibung sowohl feste als auch schaltbare Verbindungen. Ist konkret eine schaltbare Verbindung gemeint, wird in der Regel das entsprechende Schaltelement, insbesondere eine Bremse oder eine Kupplung, explizit angegeben. Ist hingegen konkret eine feste, starre oder drehfeste Verbindung gemeint, wird in der Regel der Begriff "gekoppelt" bzw. "angekoppelt" verwendet und auf die Verwendung des Begriffs "koppelbar" verzichtet. Die Verwendung des Begriffs "koppelbar" ohne Angabe eines konkreten Schaltelementes deutet somit auf den beabsichtigten Einschluss beider Fälle hin. Diese Unter-scheidung erfolgt allein zugunsten der besseren Verständlichkeit und insbesondere zur Verdeutlichung, wo das Vorsehen einer schaltbaren Verbindung anstelle einer in der Regel leichter realisierbaren festen Verbindung beziehungsweise Koppelung zwingend erforderlich ist. Die obige Definition des Begriffs "gekoppelt" bzw. "angekoppelt" ist daher keinesfalls so eng auszulegen, dass willkürlich zu Umgehungszwecken eingefügte Kupplungen aus seinem Wortsinn herausführten.

### Offenbarung der Erfindung

Es wird ein Getriebe für eine Hybridantriebsanordnung bereitgestellt, welches mit zwei Antriebsaggregaten koppelbar ist, mit einer Eingangswelle und einer Ausgangswelle, mindestens einem ersten und einem zweiten Schaltelement und mindestens einem ersten und einem zweiten Planetengetriebe, wobei die Eingangswelle mittels dem ersten Schaltelement koppelbar ist mit dem Sonnenrad des ersten Planetengetriebes, welches mit dem Sonnenrad des zweiten Planetengetriebes gekoppelt ist, und die Eingangswelle mittels dem zweiten Schaltelement koppelbar ist mit dem Planetenträger des ersten Planetengetriebes, welcher mit dem Hohlrad des zweiten Planetengetriebes gekoppelt ist, und wobei die Ausgangswelle mit dem Planetenträger des zweiten Planetengetriebes gekoppelt ist.

Es wird ein Getriebe für eine Hybridantriebsanordnung bereitgestellt. Für den Betrieb der Hybridantriebsanordnung sind zwei Antriebsaggregate an das Getriebe koppelbar. Das Getriebe umfasst eine Eingangswelle und eine Ausgangswelle, mindestens ein erstes und ein zweites Schaltelement und mindestens ein erstes und ein zweites Planetengetriebe. Die Eingangswelle ist fest mit dem ersten Schaltelement gekoppelt und somit drehfest verbunden. Im Rahmen der Beschreibung ist eine Koppelung somit eine Verbindung, welche starr, beispielsweise einstückig, beispielsweise mittels einer Welle, oder mit einer festen Übersetzung oder Getriebestufe ausgeführt ist. Weiter ist die Eingangswelle mittels Schließen des ersten Schaltelementes mit dem Sonnenrad des ersten Planetengetriebes koppelbar. Das Sonnenrad des ersten Planetengetriebes ist mit dem Sonnenrad des zweiten Planetengetriebes gekoppelt. Weiter ist die Eingangswelle mit dem zweiten Schaltelement gekoppelt und mittels Schließens des zweiten Schaltelementes mit dem Planetenträger des ersten Planetengetriebes koppelbar. Der Planetenträger des ersten Planetengetriebes ist mit dem Hohlrad des zweiten Planetengetriebes gekoppelt. Die Ausgangswelle ist mit dem Planetenträger des zweiten Planetengetriebes gekoppelt. Insbesondere ist die Ausgangswelle mit einem Abtrieb koppelbar. Der Abtrieb ist insbesondere eine Welle oder eine Achse, die die Bewegung der Ausgangswelle auf den mechanischen Antriebsstrang eines Fahrzeugs, beispielsweise auf ein Differenzial oder auf ein Antriebsrad überträgt. Vorteilhaft wird ein Getriebe bereitgestellt, welches die Drehzahl und das Drehmoment, welches an der Eingangswelle anliegt, bei geschlossenem erstem und zweitem Schaltelement entsprechend der Übersetzungsverhältnisse in dem Getriebe auf die Ausgangswelle überträgt.

In einer anderen Ausgestaltung der Erfindung umfasst das Getriebe ein drittes Schaltelement, welches dazu eingerichtet ist, dass Hohlrad des ersten Planetengetriebes abzubremsen oder freizugeben.

Für das Getriebe ist ein drittes Schaltelement vorgesehen, welches ein Freigeben oder Bremsen des Hohlrades des ersten Planetengetriebes ermöglicht, insbesondere ein Verbinden des Hohlrades oder ein Abstützen des Hohlrades an einem Fixpunkt oder an einem Gehäuse des Getriebes. Das Abbremsen des Hohlrades umfasst das Reduzieren der Drehzahl des Hohlrades, insbesondere bis zum Stillstand des Hohlrades. Das Freigeben des Hohlrades umfasst das Lösen der Bremse, so dass das Hohlrad entsprechend der auf das Hohlrad wirkenden Kräfte beschleunigt. Vorteilhaft lassen sich mit der bisher beschriebenen Topologie des Getriebes mit den ersten, zweiten und dritten Schaltelementen, neben den bereits erwähnten, weitere Betriebsmodi einstellen. So ergibt sich bei geschlossenem ersten und geöffneten zweiten Schaltelement sowie geschlossenem dritten Schaltelement ein weiteres Übersetzungsverhältnis zwischen Eingangswelle und Ausgangswelle. Bei geöffnetem erstem, geschlossenem zweitem und geschlossenem drittem Schaltelement ergibt sich eine dritte Übersetzung für den Betrieb des Getriebes. Bei geöffnetem erstem und zweitem Schaltelement ist die Eingangswelle von der Ausgangswelle abgekoppelt.

Gemäß der Erfindung umfasst das Getriebe ein viertes Schaltelement, welches dazu eingerichtet ist, dass Hohlrad des zweiten Planetengetriebes abzubremsen oder freizugeben.

Es ist ein viertes Schaltelement vorgesehen, welches das Hohlrad des zweiten Planetengetriebes freigeben oder abbremsen kann, insbesondere das Hohlrad mit einem Fixpunkt oder dem Gehäuse verbinden, koppeln oder das Hohlrad am Gehäuse abstützen. Das Abbremsen des Hohlrades umfasst das Reduzieren der Drehzahl des Hohlrades, insbesondere bis zum Stillstand des Hohlrades. Das Freigeben des Hohlrades umfasst das Lösen der Bremse, so dass das Hohlrad entsprechend der auf das Hohlrad wirkenden Kräfte beschleunigt. Vorteilhaft lassen sich mit der bisher beschriebenen Topologie des Getriebes mit dem ersten, zweiten, dritten und vierten Schaltelement, neben den bereits erwähnten, weitere Betriebsmodi einstellen. So ergibt sich vorteilhaft bei Schließen des ersten und des vierten Schaltelements und Öffnen des zweiten und des dritten Schaltelements eine vierte Übersetzung zwischen der Eingangs- und der Ausgangswelle. Bei geöffnetem erstem und zweitem Schaltelement ist die Eingangswelle von der Ausgangswelle abgekoppelt.

In einer weiteren Ausgestaltung der Erfindung umfasst das erste und/oder das zweite Schaltelement eine Kupplung. Zur Verbindung der Eingangswelle mit den genannten Komponenten der Planetengetriebe sind das erste und/oder das zweite Schaltelement als Kupplung ausgeführt. Bei einer derartigen Kupplung kann es sich insbesondere um eine Trockenkupplung, Nasskupplung oder Klauenkupplung handeln. Vorteilhaft werden Möglichkeiten für eine steuerbare Verbindung der Eingangswelle mit den Komponenten der Planetengetriebe bereitgestellt.

In einer anderen Ausgestaltung der Erfindung umfasst das dritte und/oder das vierte Schaltelement eine Bremse.

Das dritte und/oder vierte Schaltelement sind als Bremse, insbesondere eine Trocken- oder Nassbremse oder als Klauenkupplung ausgeführt. Vorteilhaft wird eine Möglichkeit zur steuerbaren Freigabe und Abbremsung der Hohlräder des ersten oder des zweiten Planetengetriebes bereitgestellt.

Gemäß der Erfindung ist ein erstes Antriebsaggregat, insbesondere eine Verbrennungskraftmaschine, mit der Eingangswelle koppelbar und ein zweites Antriebsaggregat, insbesondere eine elektrische Maschine, ist mit dem Sonnenrad des ersten Planetengetriebes und dem Sonnenrad des zweiten Planetengetriebes gekoppelt.

An der Eingangswelle ist eingangsseitig das erste Antriebsaggregat ankoppelbar. Das zweite Antriebsaggregat ist mit dem Sonnenrad des ersten Planetengetriebes und dem Sonnenrad des zweiten Planetengetriebes gekoppelt.

Vorteilhaft kann für einen generatorischen Betrieb des zweiten Antriebsaggregates, beispielsweise einer elektrischen Maschine, beispielsweise zum Laden einer Batterie, das erste Antriebsaggregat oder der Verbrennungsmotor mittels Schließen des ersten Schaltelements und Öffnen des zweiten, dritten und vierten Schaltelements mit der elektrischen Maschine verbunden werden. Da dabei beide Antriebsaggregate von der Ausgangswelle abgekoppelt sind und somit kein Drehmoment auf die Ausgangswelle übertragen wird, kann dieses Laden bei beispielsweise stillstehender Ausgangswelle, also beispielsweise während des Stillstands eines Fahrzeugs, erfolgen. Bei beispielsweise stillstehender Ausgangswelle wird eine direkte Übertragung der rotatorischen Energie des ersten Antriebsaggregates zum zweiten Antriebsaggregat oder umgekehrt ermöglicht.

Ein leistungsverzweigter Betrieb des Getriebes (eCVT-Modus) wird durch Schließen des zweiten Schaltelements und Öffnen des ersten, dritten und vierten Schaltelements ermöglicht. Dabei wirken das erste Antriebsaggregat und die elektrische Maschine auf das zweite Planetengetriebe, welches mit der Ausgangswelle verbunden ist. Dabei lässt sich das Übersetzungsverhältnis zwischen Eingangswelle und Ausgangswelle über einen weiten Bereich mittels Vorgabe einer Drehzahl oder eines Drehmomentes des zweiten Antriebaggregates kontinuierlich variieren. Vorteilhaft wird ein leistungsverzweigter Betrieb, oder auch eCVT-Modus genannt, ermöglicht, bei dem sowohl die Vortriebsleistung an der Ausgangswelle, als auch die Ladeleistung für den generatorischen Betrieb der elektrischen Maschine unabhängig voneinander einstellbar sind. Vorteilhaft wird ein Laden im Stand oder im Kriechen (>0km/h bis ca. 10KM/h) und ein sanfter komfortabler Übergang vom Modus Standladen in den Modus Kriechladen und den Modus Fahren mit fester Übersetzung, bzw. im festem Gang ermöglicht.

Bei geöffneten ersten und zweiten Schaltelement ist die Eingangswelle, und somit das erste Antriebsaggregat, von der Ausgangswelle abgekoppelt. Bei zusätzlich geschlossenen dritten Schaltelement ist das zweite Antriebsaggregat über eine erste Übersetzung mit der Abtriebswelle verbunden, so dass ein Antreiben der Ausgangswelle nur mittels des zweiten Antriebsaggregates erfolgen kann. Bei geöffnetem drittem und geschlossenem viertem Schaltelement ist das zweite Antriebsaggregat über eine zweite Übersetzung mit der Abtriebswelle gekoppelt. Dies ist eine zweite Übersetzung für einen alleinigen Antrieb mittels des zweiten Antriebsaggregates. Mittels, insbesondere dosiertem, Schließen des ersten Schaltelements kann aus dem Fahren mittels dem zweiten Antriebsaggregat das erste Antriebsaggregat angetrieben und beispielsweise gestartet werden, falls das erste Antriebsaggregat ein Verbrennungsmotor ist.

Es besteht auch die Möglichkeit, dass das erste Antriebsaggregat beispielsweise als elektrische Maschine ausgestaltet ist und das zweite Antriebsaggregat beispielsweise als Verbrennungskraftmaschine ausgestaltet ist. In einer solchen Konfiguration können sich mittels des Getriebes andere Funktionalitäten und Betriebsmodi für das Zusammenwirken der Komponenten ergeben, die hier nicht weiter ausgeführt werden.

In einer anderen Ausgestaltung der Erfindung erfolgt das Ändern der Übersetzungsverhältnisse des Getriebes zugkraftunterbrechungsfrei.

Ein Ändern der Übersetzungsverhältnisse des Getriebes, insbesondere ein Schalten in einen anderen Gang oder in einen anderen Betriebsmodus des Getriebes erfolgt zugkraftunterbrechungsfrei, wenn insbesondere für den Wechsel aus einem Betriebsmodus des Getriebes in einen anderen eines der Schaltelement seinen Zustand beibehält, ein zweites der Schaltelemente aus einem geschlossenen Zustand in einen geöffneten Zustand überführt wird und ein drittes der Schaltelemente aus einem geöffneten in einen geschlossenen Zustand überführt wird. Vorteilhaft wird ein Getriebe bereitgestellt, bei dem das Wechseln der Gangstufen ohne eine Unterbrechung der Zugkraft ermöglicht wird.

In einer anderen Ausgestaltung der Erfindung umfasst das Getriebe eine Ansteuerung zur Ansteuerung mindestens eines der Schaltelemente in Abhängigkeit eines vorgegebenen Betriebsvorgabesignals.

Es ist eine Ansteuerung vorgesehen welche in Abhängigkeit eines vorgegebenen Betriebsvorgabesignals, beispielsweise ein angefordertes Drehmoment, eine vorgegebene Drehzahl, oder ein bestimmter Betriebspunkt der Antriebsaggregate, mindestens eines der Schaltelemente ansteuert. Die genannten Parameter des Betriebsvorgabesignals können auf die Ausgangswelle des Getriebes, auf die Eingangswelle oder auf die mit den Antriebsaggregaten zu verbindenden Wellen bezogen sein. Vorteilhaft wird eine Steuerung des Getriebes ermöglicht.

Ferner betrifft die Erfindung eine Hybrid-Antriebsanordnung mit einem Getriebe, wobei die Hybridantriebsanordnung das zweite Antriebsaggregat (8) und einen Pulswechselrichter (60), eine elektrische Energiequelle (70) oder ein erstes Antriebsaggregat (7) umfasst.

Es wird eine Hybridantriebsanordnung mit einem bisher beschriebenen Getriebe bereitgestellt. Die Hybridantriebsanordnung umfasst somit auch das zweite Antriebsaggregat. Insbesondere umfasst die Hybridantriebsanordnung einen Pulswechselrichter, eine elektrische Energiequelle und oder ein erstes Antriebsaggregat. Das zweite Antriebsaggregat ist mit den Sonnenrädern der Planetengetriebe gekoppelt oder verbunden. Der Pulswechselrichter ist insbesondere zur Versorgung des zweiten Antriebsaggregates, insbesondere einer elektrischen Maschine, vorgesehen. Hierzu wandelt er insbesondere die elektrische Energie einer elektrischen Energiequelle, beispielsweise einer Batterie und/ oder einer Brennstoffzelle um. Das erste Antriebsaggregat ist insbesondere mit der Eingangswelle gekoppelt oder verbunden. Vorteilhaft wird eine Hybridantriebsanordnung, welche für den Einsatz in einem Fahrzeug eingerichtet ist, bereitgestellt.

Ferner umfasst die Erfindung ein Fahrzeug mit einer beschriebenen Hybridantriebsanordnung. Vorteilhaft wird ein Fahrzeug bereitgestellt, welches eine Hybridantriebsanordnung umfasst.

Außerhalb des Umfangs der in den Ansprüchen definierten Erfindung wird ein Verfahren zum Betrieb einer Hybridantriebsanordnung mit einem Getriebe beschrieben. Das Verfahren umfasst folgende Schritte:
Ermitteln eines Betriebsvorgabesignals;
Ansteuern mindestens eines der Schaltelemente zur Einstellung der Funktionalität des Getriebes in Abhängigkeit des Betriebsvorgabesignals (BV).

Es wird ein Verfahren zum Betrieb einer Hybridantriebsanordnung mit einem Getriebe bereitgestellt. Dabei wird ein Betriebsvorgabesignal ermittelt. Mindestens eines der Schaltelemente wird zur Einstellung der Funktionalität des Getriebes oder eines entsprechenden Betriebsmodus in Abhängigkeit des Betriebsvorgabesignals geschlossen oder geöffnet. Das Betriebsvorgabesignal wird in Abhängigkeit einer Betriebsstrategie, eines Fahrerwunsches oder Fahrpedals, eines Batteriemanagementsystems oder anderer beispielsweise in einem Fahrzeug verfügbaren Systemen vorgegeben. In Abhängigkeit dieses Betriebsvorgabesignals werden die Schaltelemente zur Einstellung der entsprechenden Funktionalität oder des Betriebsmodus des Getriebes angesteuert, insbesondere die Kupplungen oder Bremsen geschlossen oder geöffnet. Die Funktionalität des Getriebes oder der Betriebsmodus sind insbesondere die unterschiedlichen Übersetzungsverhältnisse der verschiedenen Gangstufen, oder die verschiedenen Modi oder Betriebsmodi, beispielsweise ein generatorischer Betrieb des zweiten Antriebsaggregates bei stillstehender Ausgangswelle oder der eCVT-Modus. Vorteilhaft wird ein Verfahren für den Betrieb der Hybridantriebsanordnung bereitgestellt.

Es versteht sich, dass die Merkmale, Eigenschaften und Vorteile des Getriebes entsprechend auf die Hybridantriebsanordnung und auf das Fahrzeug zutreffen bzw. anwendbar sind. Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Im Folgenden soll die Erfindung anhand einiger Figuren näher erläutert werden, dazu zeigen:
Figur 1: eine schematische Darstellung der Hybridantriebsstranganordnung mit einem Getriebe.
Figur 2: eine Schaltmatrix des Getriebes.
Figur 3: ein schematisch dargestelltes Fahrzeug mit einer Hybridantriebstranganordnung.
Figur 4: ein schematisch dargestelltes Verfahren zum Betrieb einer Hybridantriebstranganordnung.

### Ausführungsformen der Erfindung

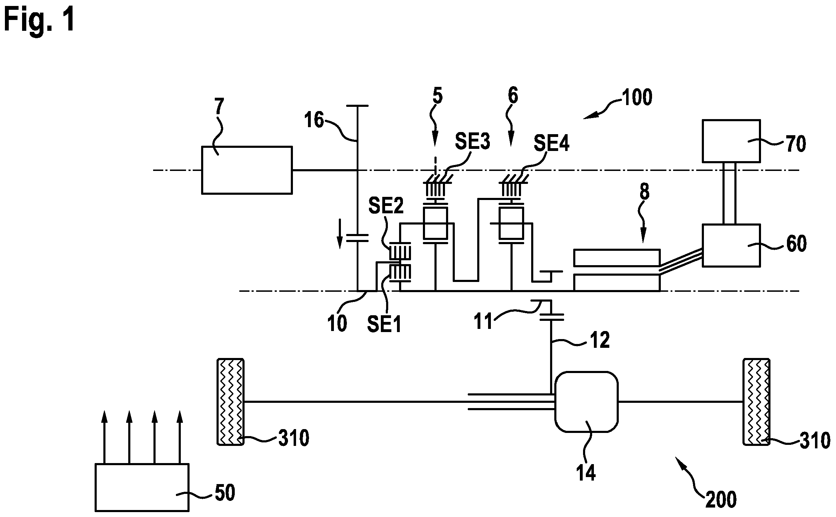

Die Figur 1 zeigt eine Hybridantriebstranganordnung 200 mit einem ersten Antriebsaggregat 7, insbesondere einem Verbrennungsmotor, und einem zweiten Antriebsaggregat 8, insbesondere einer elektrischen Maschine und einem Getriebe 100. Insbesondere umfasst die Hybridantriebstranganordnung einen Pulswechselrichter 60 zur Versorgung des zweiten Antriebsaggregates 8 mit elektrischer Energie. Weiter umfasst die Hybridantriebstranganordnung 200 insbesondere eine elektrische Energiequelle 70, welche mit dem Pulswechselrichter 60 verbunden ist. Das Getriebe 100 umfasst die Eingangswelle 10 und die Ausgangswelle 11. Weiter umfasst das Getriebe 100 ein erstes Planetengetriebe 5 und ein zweites Planetengetriebe 6. Weiter umfasst das Getriebe 100 ein erstes Schaltelement SE1 und ein zweites Schaltelement SE2. Das erste Schaltelement SE1, insbesondere eine Kupplung, ist dazu eingerichtet, die Eingangswelle 10 mit den Sonnenrädern des ersten und des zweiten Planetengetriebes 5, 6 zu verbinden oder zu trennen. Das zweite Schaltelement SE2, insbesondere eine Kupplung, ist dazu eingerichtet, die Eingangswelle mit dem Planetenträger des ersten Planetengetriebes 5 und dem Hohlrad des zweiten Planetengetriebes 6 zu verbinden oder zu trennen. Weiter kann das Getriebe 100 ein drittes Schaltelement SE3 und ein viertes Schaltelement SE4 umfassen. Das dritte Schaltelement SE3, insbesondere eine Bremse, ist dazu eingerichtet, das Hohlrad des ersten Planetengetriebes 5 freizugeben oder abzubremsen, insbesondere in dem die Bremse das Hohlrad mit einem Fixpunkt verbindet oder beispielsweise am Gehäuse (nicht dargestellt) des Getriebes 100 abstützt. Das Schaltelement SE4, insbesondere eine Bremse, ist dazu eingerichtet, das Hohlrad des zweiten Planetengetriebes 6 freizugeben oder abzubremsen, insbesondere in dem die Bremse das Hohlrad mit einem Fixpunkt verbindet oder beispielsweise am Gehäuse (nicht dargestellt) des Getriebes 100 abstützt. Das Getriebe ist weiter dazu eingerichtet, für den Betrieb mit einem ersten Antriebsaggregat 7 über die Eingangswelle 10 gekoppelt oder verbunden zu werden. In der Figur 1 ist dazu dargestellt, dass die Welle des Antriebsaggregates 7 über ein Stirnradsatz 16 mit der Eingangswelle 10 verbunden wird. Das zweite Antriebsaggregat 8, insbesondere eine elektrische Maschine, wird für den Betrieb des Getriebes 100 wie in der Figur 1 dargestellt mit den Sonnenrädern der Planetengetriebe 5 und 6 und dem Schaltelement 1 gekoppelt oder verbunden. Für eine Optimierung der Übersetzungsverhältnisse ist die Ausgangswelle 11 beispielsweise über einen Abtrieb 12, insbesondere einen Stirnradsatz, beispielsweise mit einem Differential 14 verbunden, über welches die Bewegungen auf die Räder 310 übertragen werden. Für die Ansteuerung der Schaltelemente ist eine Ansteuerung 50 vorgesehen, die das Verfahren zum Betrieb der Hybridantriebsanordnung mit dem Getriebe ausführt. Mittels der Pfeile an der Ansteuerung 50 sind die Steuerleitungen zwischen der Ansteuerung 50 und den Schaltelementen SE1..SE4 angedeutet. Diese Steuerleitungen sind für eine verbesserte Darstellung nicht vollständig eingezeichnet. Die Kommunikation zwischen den Schaltelementen und der Vorrichtung kann jedoch auch mittels eines BUS-Systems oder kabellos erfolgen.

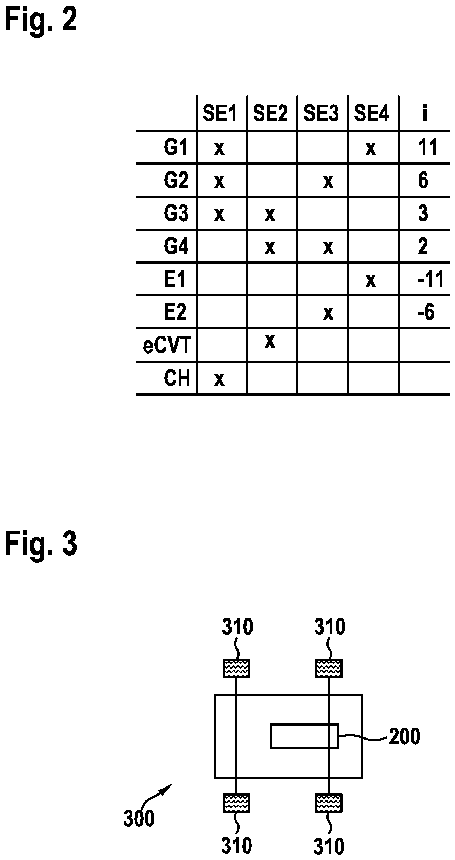

Figur 2 zeigt eine Schaltmatrix des Getriebes. In den Spalten sind die einzelnen Schaltelemente SE1..SE4 angegeben und in der letzten Spalte beispielhaft ein sich zwischen der Eingangswelle und der Ausgangswelle ergebendes ungefähres Übersetzungsverhältnis. In den Zeilen sind die unterschiedlichen Gangstufen, Gänge oder Betriebsmodi des Getriebes angegeben. Mittels Kreuzen ist in der Schaltmatrix dargestellt, welches der Schaltelemente aktiviert sein muss, damit sich der entsprechende Gang oder Betriebsmodus einstellt. Mit Aktivierung der Schaltelemente ist hierbei insbesondere gemeint, dass eine Kupplung geschlossen wird oder eine Bremse betätigt wird, sodass über die Kupplung eine Kraft von einer Welle auf eine weitere Welle übertragen werden kann und mittels der Bremse eine Kraft auf einen Fixpunkt, insbesondere das Getriebegehäuse, übertragen werden kann. Aus der Schaltmatrix ist ersichtlich, dass sich je nach Kombination der vier Schaltelemente vier Gänge G1.....G4 einstellen lassen, wobei der erste Gang G1 das höchste Übersetzungsverhältnis und der vierte Gang G4 das niedrigste Übersetzungsverhältnis aufweist. Bei diesen Gängen liegt zwischen Eingangs- und Ausgangswelle in festes Drehzahlverhältnis entsprechend der Übersetzung an und ein erstes und zweites Antriebsaggregat treiben entweder jeweils einzeln oder zusammen die Ausgangswelle 11 an. Insbesondere sind dies verbrennungsmotorische oder hybridische Gänge, beispielsweise wenn das Antriebsaggregat ein Verbrennungsmotor ist und das zweite Antriebsaggregat eine elektrische Maschine ist. Diese Gänge ermöglichen auch eine Lastpunktanhebung des Verbrennungsmotors, so dass die elektrische Maschine generatorisch betrieben werden kann und ein Laden einer Batterie während des Betriebs, insbesondere Fahrbetrieb eines Fahrzeugs, erfolgen kann. In den folgenden Zeilen der Matrix schließen sich die Gänge E1 und E2 oder Betriebsmodi an, in denen nur das zweite Antriebsaggregat mit der Ausgangswelle 11 verbunden ist. Hierzu müssen insbesondere das erste und das zweite Schaltelement geöffnet sein, damit keine Verbindung zum ersten Antriebsaggregat besteht. Dies sind insbesondere elektromotorische Gänge, beispielsweise wenn das zweite Antriebsaggregat eine elektrische Maschine ist. Vorteilhaft kann in diesen Gängen ein Fahrzeug lokal emissionsfrei betrieben werden. Je nachdem, ob das zweite Antriebsaggregat über das zweite Planetengetriebe 6 und das vierte Schaltelement SE4 mit der Ausgangswelle 11 gekoppelt wird, ergibt sich eine hohe Übersetzung oder bei Verbindung des zweiten Antriebsaggregates über das erste Planetengetriebe 5 und das Schaltelement 3 ergibt sich eine niedrigere Übersetzung, wie in der letzten Spalte der Schaltmatrix dargestellt.

Durch Öffnen des dritten und vierten Schaltelementes SE3, SE4 und des ersten Schaltelementes SE1 und Schließen des zweiten Schaltelementes SE2 ergibt sich ein leistungsverzweigter Betrieb, der eCVT-Modus, welcher eine voneinander unabhängige Vortriebsleistung an der Ausgangswelle 11 und Ladeleistung des zweiten Antriebsaggregates 8 ermöglicht. Insbesondere eignet sich dieser Betriebsmodus zum hybridischen Anfahren bei niedrigem Batterieladezustand, da ein stufenloses Verändern der Übersetzungsverhältnisse und damit insbesondere stufenloses Beschleunigen bei gleichzeitigem generatorischen Betrieb des zweiten Antriebsaggregates 8 möglich ist.

Ein weiterer Modus CH, oder auch Standladen genannt, ergibt sich, wenn nur das erste Schaltelement SE1 geschlossen ist und alle weiteren drei Schaltelemente SE2..SE4 geöffnet sind. Die Antriebsaggregate 7 und 8 werden dabei miteinander gekoppelt, wobei keine Verbindung zur Ausgangswelle 11 besteht. In diesem Betriebsmodus kann während des Stillstands der Ausgangswelle, insbesondere eines Fahrzeugs, mittels des ersten Antriebsaggregates 7 das zweite 8 angetrieben werden, beispielsweise generatorisch zum Laden einer elektrischen Energiequelle 70, beispielsweise eine Batterie, verwendet werden. Alternativ kann mittels des zweiten Antriebsaggregates 8 auch das erste 7 angetrieben werden und beispielsweise ein Verbrennungsmotorstart oder eine Diagnose des Verbrennungsmotors durchgeführt werden, falls das erste Antriebsaggregat 7 ein Verbrennungsmotor ist und das zweite Antriebsaggregat 8 eine elektrische Maschine ist.

Figur 3 zeigt ein Fahrzeug 300 mit Rädern 310, wobei das Fahrzeug eine Hybridantriebsanordnung 200, wie oben beschrieben, umfasst.

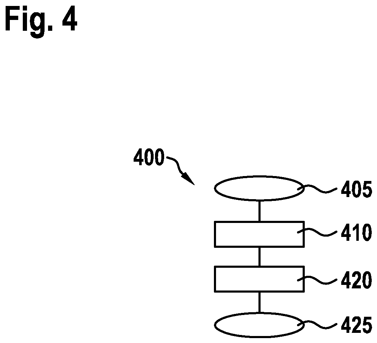

Figur 4 zeigt ein Ablaufdiagramm eines Verfahrens 400 zum Betrieb einer Hybridantriebsanordnung 200 mit einem Getriebe 100. Mit Schritt 405 startet das Verfahren. In Schritt 410 wird ein Betriebsvorgabesignal BV ermittelt und in Schritt 420 mindestens eines der Schaltelemente SE1....SE4 zur Einstellung der Funktionalität des Getriebes 100 in Abhängigkeit des Betriebsvorgabesignals BV angesteuert. Mit Schritt 425 endet das Verfahren. Das Betriebsvorgabesignal BV ist hierbei entweder ein Parameter für eine physikalische Größe im Getriebe 100 wie z.B. ein Drehmoment oder eine Drehzahl oder eine zu übertragende Leistung, welche an einer Komponente des Getriebes 100 anliegen oder übertragen werden soll. Diese Komponenten sind insbesondere Eingangswelle 10, Ausgangswelle 11 aber auch die Parameter an den Antriebsaggregaten 7, 8 oder den Schaltelementen SE1..SE4. Darüber hinaus kann das Betriebsvorgabesignal BV auch einen bestimmten Betriebsmodus wie einen der vier Gänge G1.....G4 oder der zwei Gänge E1..E2, welche nur mit dem zweiten Antriebsaggregat betrieben werden, oder auch die besonderen Funktionen eCVT oder Standladen CH darstellen. In Abhängigkeit dieses Betriebsvorgabesignals BV werden die Schaltelemente SE1 bis SE4 entsprechend der Schaltmatrix angesteuert, um das Getriebe 100 in den entsprechenden Gang oder Betriebsmodus zu schalten. Für eine zugkraftunterbrechungsfreie Umschaltung zwischen den einzelnen Gängen oder Betriebsmodi ist es notwendig, dass eines der Schaltelemente SE1..SE4 seinen Zustand vor und nach der Schaltung beibehält, wobei ein weiteres Schaltelement während des Schaltens aus dem geöffneten in den geschlossenen Zustand übergeht, während ein anderes aus dem geschlossenen in den geöffneten Zustand übergeht.

## Patentansprüche

1. Getriebe (100) für eine Hybridantriebsanordnung,
welches mit zwei Antriebsaggregaten (7, 8) koppelbar ist,
mit
einer Eingangswelle (10) und einer Ausgangswelle (11),
mindestens einem ersten und einem zweiten Schaltelement (SE1, SE2),
einem vierten Schaltelement (SE4),
mindestens einem ersten und einem zweiten Planetengetriebe (5,6)
wobei
ein erstes Antriebsaggregat (7), insbesondere eine Verbrennungskraftmaschine,
mit der Eingangswelle (10) koppelbar ist,
wobei die Eingangswelle (10) mittels dem ersten Schaltelement (SE1) koppelbar ist mit dem Sonnenrad des ersten Planetengetriebes (5), welches mit dem Sonnenrad des zweiten Planetengetriebes (6) gekoppelt ist,
wobei die Eingangswelle (10) mittels dem zweiten Schaltelement (SE2) koppelbar ist mit dem Planetenträger des ersten Planetengetriebes (5), welcher mit dem Hohlrad des zweiten Planetengetriebes (6) gekoppelt ist,
wobei das vierte Schaltelement (SE4) dazu eingerichtet ist, das Hohlrad des zweiten Planetengetriebes (6) abzubremsen oder freizugeben,
und wobei die Ausgangswelle (11) mit dem Planetenträger des zweiten Planetengetriebes (6) gekoppelt ist,
**dadurch gekennzeichnet, dass** ein zweites Antriebsaggregat (8), insbesondere eine elektrische Maschine, mit dem Sonnenrad des ersten Planetengetriebes (5) und dem Sonnenrad des zweiten Planetengetriebes (6) gekoppelt

2. Getriebe nach Anspruch 1,
mit einem dritten Schaltelement (SE3), welches dazu eingerichtet ist, das Hohlrad des ersten Planetengetriebes (5) abzubremsen oder freizugeben.

3. Getriebe nach einem der vorhergehenden Ansprüche,
wobei das erste und/ oder das zweite Schaltelement (SE1, SE2) eine Kupplung umfasst.

4. Getriebe nach einem der vorhergehenden Ansprüche,
sowie nach Anspruch 2, soweit das dritte Schaltelement betroffen ist,
wobei das dritte und/ oder das vierte Schaltelement (SE3, SE4) eine Bremse umfasst.

5. Getriebe nach einem der vorhergehenden Ansprüche,
wobei ein Ändern der Übersetzungsverhältnisse des Getriebes (100) zugkraftunterbrechungsfrei erfolgt.

6. Getriebe nach einem der vorhergehenden Ansprüche,
mit einer Ansteuerung (50) zur Ansteuerung mindestens eines der Schaltelemente (SE1..SE4) in Abhängigkeit eines vorgegebenen Betriebsvorgabesignals (BV).

7. Hybridantriebsanordnung (200) mit einem Getriebe (100) nach einem der Ansprüche 1 bis 8, wobei die Hybridantriebsanordnung das zweite Antriebsaggregat (8) und
einen Pulswechselrichter (60), eine elektrische Energiequelle oder ein erstes Antriebsaggregat (7) umfasst.

8. Fahrzeug (300) mit einer Hybridantriebsanordnung (200) nach Anspruch 7.

## Claims

1. Transmission (100) for a hybrid drive arrangement, which transmission (100) can be coupled to two drive units (7, 8), with an input shaft (10) and an output shaft (11), at least one first and one second shifting element (SE1, SE2), a fourth shifting element (SE4), at least one first and one second planetary gear mechanism (5, 6), it being possible for a first drive unit (7), in particular an internal combustion engine, to be coupled to the input shaft (10), it being possible for the input shaft (10) to be coupled by means of the first shifting element (SE1) to the sun gear of the first planetary gear mechanism (5) which is coupled to the sun gear of the second planetary gear mechanism (6), it being possible for the input shaft (10) to be coupled by means of the second shifting element (SE2) to the planetary carrier of the first planetary gear mechanism (5) which is coupled to the internal gear of the second planetary gear mechanism (6), the fourth shifting element (SE4) being configured to brake or to release the internal gear of the second planetary gear mechanism (6), and the output shaft (11) being coupled to the planetary carrier of the second planetary gear mechanism (6), **characterized in that** a second drive unit (8), in particular an electric machine, is coupled to the sun gear of the first planetary gear mechanism (5) and the sun gear of the second planetary gear mechanism (6).

2. Transmission according to Claim 1, with a third shifting element (SE3) which is configured to brake or to release the internal gear of the first planetary gear mechanism (5).

3. Transmission according to either of the preceding claims, the first and/or the second shifting element (SE1, SE2) comprising a clutch.

4. Transmission according to one of the preceding claims, and according to Claim 2 if the third shifting element is concerned, the third and/or the fourth shifting element (SE3, SE4) comprising a brake.

5. Transmission according to one of the preceding claims, a change in the transmission ratios of the transmission (100) taking place without an interruption in the tractive power.

6. Transmission according to one of the preceding claims, with an actuation means (50) for actuating at least one of the shifting elements (SE1..SE4) in a manner which is dependent on a predetermined operating specification signal (BV).

7. Hybrid drive arrangement (200) with a transmission (100) according to one of Claims 1 to 8, the hybrid drive arrangement comprising the second drive unit (8) and a pulse inverter (60), an electric energy source or a first drive unit (7).

8. Vehicle (300) with a hybrid drive arrangement (200) according to Claim 7.

## Revendications

1. Boîte de vitesses (100) pour un système de propulsion hybride, qui peut être accouplée à deux groupes de propulsion (7, 8), comprenant
un arbre d'entrée (10) et un arbre de sortie (11),
au moins un premier et un deuxième élément de changement de vitesse (SE1, SE2),
un quatrième élément de changement de vitesse (SE4),
au moins un premier et un deuxième train épicycloïdal (5, 6),
dans laquelle
un premier groupe de propulsion (7), en particulier un moteur à combustion interne, peut être accouplé à l'arbre d'entrée (10),
l'arbre d'entrée (10) pouvant être accouplé au moyen du premier élément de changement de vitesse (SE1) à la roue solaire du premier train épicycloïdal (5) qui est accouplée à la roue solaire du deuxième train épicycloïdal (6),
l'arbre d'entrée (10) pouvant être accouplé au moyen du deuxième élément de changement de vitesse (SE2) au porte-satellites du premier train épicycloïdal (5) qui est accouplé à la couronne du deuxième train épicycloïdal (6),
le quatrième élément de changement de vitesse (SE4) étant conçu pour freiner ou libérer la couronne du deuxième train épicycloïdal (6),
et dans laquelle l'arbre de sortie (11) est accouplé au porte-satellites du deuxième train épicycloïdal (6),
**caractérisée en ce qu'**un deuxième groupe de propulsion (8), en particulier une machine électrique, est accouplé à la roue solaire du premier train épicycloïdal (5) et à la roue solaire du deuxième train épicycloïdal (6).

2. Boîte de vitesses selon la revendication 1, comprenant un troisième élément de changement de vitesse (SE3) qui est conçu pour freiner ou libérer la couronne du premier train épicycloïdal (5).

3. Boîte de vitesses selon l'une quelconque des revendications précédentes, dans laquelle le premier et/ou le deuxième élément de changement de vitesse (SE1, SE2) comprend/comprennent un embrayage.

4. Boîte de vitesses selon l'une quelconque des revendications précédentes ainsi que selon la revendication 2 dans la mesure où elle porte sur le troisième élément de changement de vitesse, dans laquelle le troisième et/ou le quatrième élément de changement de vitesse (SE3, SE4) comprend/comprennent un frein.

5. Boîte de vitesses selon l'une quelconque des revendications précédentes, dans laquelle une modification du rapport de transmission de la boîte de vitesses (100) est effectuée sans interruption de la force de traction.

6. Boîte de vitesses selon l'une quelconque des revendications précédentes, comprenant un dispositif de pilotage (50) pour piloter au moins l'un des éléments de changement de vitesse (SE1 ... SE4) en fonction d'un signal de consigne de fonctionnement (BV) prédéfini.

7. Agencement de propulsion hybride (200) comprenant une boîte de vitesses (100) selon l'une quelconque des revendications 1 à 8, l'agencement de propulsion hybride comprenant le deuxième groupe de propulsion (8) et un onduleur à impulsions (60), une source d'énergie électrique ou un premier groupe de propulsion (7).

8. Véhicule (300) comprenant un agencement de propulsion hybride (200) selon la revendication 7.
